# EUROPÄISCHE PATENTANMELDUNG

(11) **EP 2 756 912 A1**
(43) Veröffentlichungstag der Anmeldung: **23.07.2014**
(21) Anmeldenummer: 13151884.7
(22) Anmeldetag: 18.01.2013
(51) Int. Cl.: B23K 26/34, B23K 26/00

(54) **Umschmelzen beim Auftragsschweißen**

(71) Anmelder: Siemens Aktiengesellschaft, 80333 München (DE)
(72) Erfinder: Burbaum, Bernd, Dr., 14612 Falkensee (DE); Melzer-Jokisch, Torsten, 15366 Neuenhagen bei Berlin (DE); Ott, Michael, Dr., 45470 Mülheim an der Ruhr (DE); Piegert, Sebastian, 10777 Berlin (DE)

(57) **Zusammenfassung**

Durch das Umschmelzen von auftragsgeschweißten Schichten wird eine gewünschte Mikrostruktur mit vergrößerten Körnern eingestellt, die zu verbesserten Hochtemperatureigenschaften führt.

## Beschreibung

Die Erfindung betrifft das Umschmelzen von Auftragsschweißschichten.

Bei servicebeanspruchten Komponenten, wie bei Gasturbinen bekannt für Turbinenschaufeln, werden Reparaturschweißungen durchgeführt, bei dem Material aufgetragen wird.

Dies kann durch Laserauftragsschweißen erfolgen.
Ebenso bekannt ist das Laserstrahlumschmelzen, bei dem Risse ohne Materialauftrag umgeschmolzen werden.

Auftragsgeschweißte Schichten weisen oft nicht die gewünschte Mikrostruktur auf, insbesondere für die Hochtemperatureigenschaften.

Es ist daher Aufgabe der Erfindung oben genanntes Problem zu lösen.

Die Aufgabe wird gelöst durch ein Verfahren gemäß Anspruch 1 und ein Bauteil gemäß Anspruch 6.

In den Unteransprüchen sind weitere vorteilhafte Maßnahmen aufgelistet, die beliebig miteinander kombiniert werden können, um weitere Vorteile zu erzielen.

So werden vorteilhafte Mikrostrukturen erreicht.

Es zeigen:
- Figuren 1 - 3: Schritte des Verfahrens bzw. des erfindungsgemäßen Bauteils,
- Figur 4: eine Liste von Superlegierungen.

Die Figuren und die Beschreibung stellen nur Ausführungsbeispiele der Erfindung dar.

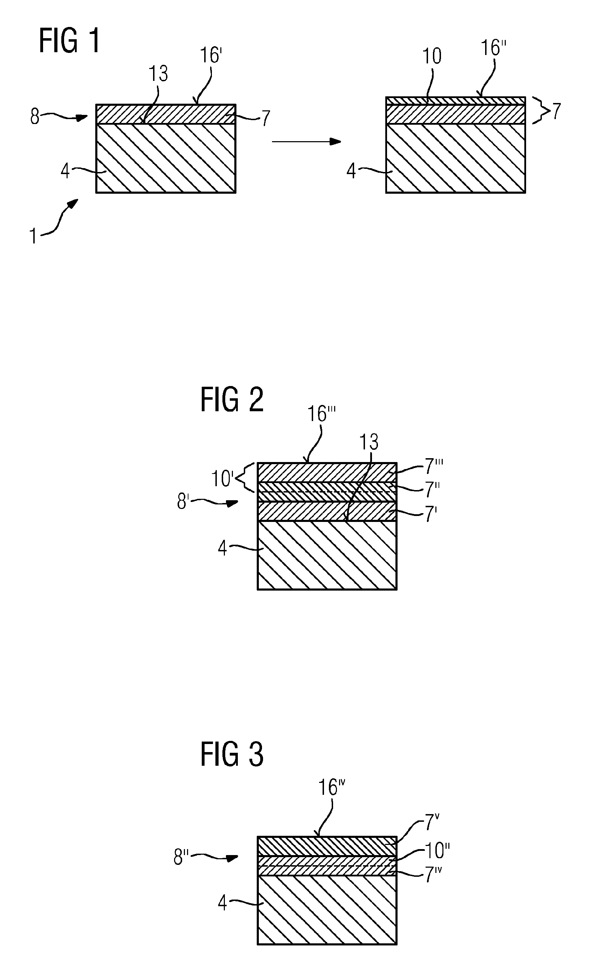

Die Figur 1 zeigt als Ausgangspunkt ein Bauteil 1 mit einem Substrat 4, auf dem eine Auftragsschweißung 8 aus einer auftragsgeschweißten Schicht 7 vorhanden ist.

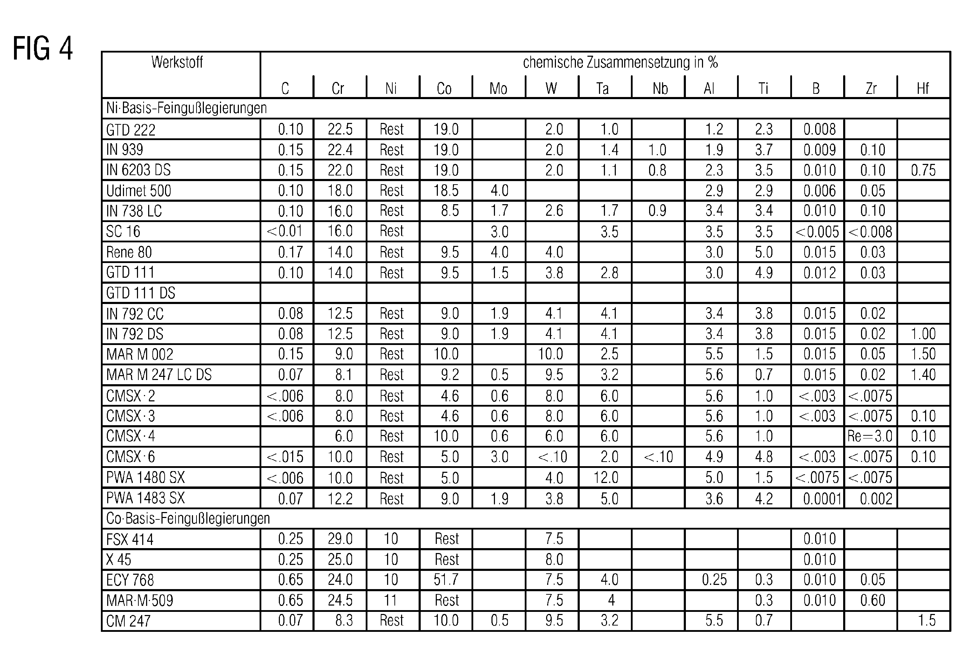

Das Substrat 4 ist metallisch und bei Gasturbinenkomponenten vorzugsweise eine nickel- oder kobaltbasierte Superlegierung, insbesondere gemäß Figur 4.

Auf einer Oberfläche 13 des Substrats 4 ist die Auftragsschweißung 8 vorhanden, die vorzugsweise durch ein Laserauftragsschweißen erfolgte.

Das Material der Auftragsschweißung 8 kann dem Material des Substrats 4 entsprechen oder ähnlich sein.

Zur Vergrößerung der Körner und zur Verkleinerung der Anzahl der Korngrenzen quer zu einer Belastungsrichtung wird die Oberfläche 16' der Auftragsschweißung 8 mit einem Laserstrahl behandelt, so dass innerhalb der geschweißten Schicht 7 ein Umschmelzbereich 10 mit einer Oberfläche 16" entsteht.

Figur 2 zeigt ein weiteres Ausführungsbeispiel der Erfindung, bei dem bereits mehrere auftragsgeschweißte Schichten 7', 7'', 7''' auf dem Substrat 4 und dessen Oberfläche 13 vorhanden sind und die Auftragsschweißung 8' bilden.

Erst nachdem mehrere auftragsgeschweißte Schichten 7', 7'', 7''' vorhanden sind, wird der Umschmelzprozess durchgeführt, um einen Umschmelzbereich 10' zu erzeugen, der sich dann über eine, insbesondere zwei, ganz insbesondere über mehrere auftragsgeschweißte Schichten 7''', 7" erstreckt.
Vorzugsweise werden nicht alle auftragsgeschweißte Schichten 7', 7'', 7''' erfasst.

Dies ist insbesondere dann der Fall, wenn die Höhe der auftragsgeschweißten Schichten 7', 7'', 7''' kleiner ist als die zu erreichende Umschmelztiefe des Umschmelzbereichs 10'.

Ebenso ist es möglich, auf einen Umschmelzbereich 10" innerhalb einer auftragsgeschweißten Schicht 7^{IV} eine weitere auftragsgeschweißte Schicht 7^{V} mit einer Oberfläche 16^{IV} aufzutragen, die sich bezüglich der Korngrößenbildung an die Korngröße des Umschmelzbereichs 10" anschließt (Fig. 3) und die vorzugsweise nicht umgeschmolzen wird.

Der Umschmelzbereich 10', 10 (Fig. 1, 2) oder eine Auftragsschweißung 7^{V} gemäß Figur 3 kann dann die äußerste Oberfläche 16'', 16''' , 16^{IV} darstellen, auf die dann in bekannter Art und Weise metallische Schutzschichten (MCrAlX, PtAl, ...) und/oder keramische Wärmedämmschichten (ZrO₂ - Y₂O₃) aufgebracht werden.

Vorzugsweise eignet sich dieses Verfahren für polykristallin erstarrte Substrate 4 (Fig. 1- 3).

## Patentansprüche

1. Verfahren
zum Auftragsschweißen auf eine Fläche (13) eines Substrats (4),
bei dem im ersten Schritt zumindest eine auftragsgeschweißte Schicht (7, 7', ... 7^{IV}, 7^{V}) erzeugt wird und
dass zumindest einmal,
insbesondere nur einmal,
ein Umschmelzvorgang mit der zumindest einen auftragsgeschweißten Schicht (7, 7^{IV}, 7''', 7'', 7') erfolgt,
um einen Umschmelzbereich (10, 10', 10'') in zumindest einer auftragsgeschweißten Schicht (7, 7''', 7'', ...7^{IV}) zu erzeugen.

2. Verfahren nach Anspruch 1,
bei dem mehrere auftragsgeschweißte Schichten (7', 7'', 7''', ...) übereinander aufgetragen werden und
erst dann ein äußerer Umschmelzbereich (10') erzeugt wird, der sich über eine,
vorzugsweise über mehrere,
auftragsgeschweißte Schichten (7''', 7'' , ...) ,
ganz insbesondere nicht alle Schichten (7''', 7'', ...) erstreckt.

3. Verfahren nach einem oder beiden der Ansprüche 1 oder 2, bei dem eine weitere auftragsgeschweißte Schicht (7^{V}) auf einen Umschmelzbereich (10'') aufgetragen wird, insbesondere wobei die auftragsgeschweißte Schicht (7^{V}) nicht umgeschmolzen wird.

4. Verfahren nach einem oder beiden der Ansprüche 1 oder 2, bei dem der Umschmelzbereich (10, 10') die äußerste Schicht der Auftragsschweißung (7, 7', 7 ", 7''') darstellt.

5. Verfahren nach einem oder mehreren der vorherigen Ansprüche,
bei dem auf eine äußere Oberfläche (16) eines Umschmelzbereichs (10') oder
auf eine auftragsgeschweißte Schicht (7^{V}) mit einem unterliegenden Umschmelzbereich (10'')
weitere bekannte metallische Schutzschichten und/oder keramische Schutzschichten aufgetragen werden,
die von dem Material der auftragsgeschweißten Schichten (7, 7', ...) deutlich verschieden sind.

6. Bauteil,
insbesondere hergestellt nach einem oder mehreren der vorherigen Ansprüche,
das ein Substrat (4) und zumindest eine auftragsgeschweißte Schicht (7, 7', ..., 7^{V}) aufweist und
zumindest einen Umschmelzbereich (10, 10', 10'') innerhalb der zumindest einen auftragsgeschweißten Schicht (7, 7', ... 7^{V}).

7. Bauteil nach Anspruch 6,
das mehrere auftragsgeschweißte Schichten (7', 7'', 7''', ...) und
einen äußeren Umschmelzbereich (10') aufweist,
der sich über eine,
vorzugsweise über mehrere,
auftragsgeschweißte Schichten (7'', 7''', ...) erstreckt.

8. Bauteil nach einem oder beiden der Ansprüche 6 oder 7, das zumindest eine weitere auftragsgeschweißte Schicht (7^{V}) auf einem Umschmelzbereich (10'') aufweist,
insbesondere wobei die auftragsgeschweißte Schicht (7^{V}) nicht umgeschmolzen ist.

9. Bauteil nach einem oder mehreren der Ansprüche 6 bis 8, das auf einer äußeren Oberfläche (16) eines Umschmelzbereichs (10') oder
auf einer auftragsgeschweißten Schicht (7^{V}) mit einem unterliegenden Umschmelzbereich (10'')
weitere bekannte metallische Schutzschichten und/oder keramische Schutzschichten aufweist,
die von dem Material der auftragsgeschweißten Schichten verschieden sind.
